(19)

Europäisches
Patentamt
European
Patent Office
Office européen
des brevets

(11) **EP 2 713 189 B1**

(12) **EUROPEAN PATENT SPECIFICATION**

(45) Date of publication and mention
of the grant of the patent:
**26.08.2015 Bulletin 2015/35**

(51) Int Cl.:
***G02B 6/26*** *(2006.01)*  ***G02B 6/42*** *(2006.01)*
***G02B 6/32*** *(2006.01)*

(21) Application number: **12186575.2**

(22) Date of filing: **28.09.2012**

(54) **Optical fiber, light coupling unit and method**

Glasfaser, Lichtkopplungseinheit und Verfahren

Fibre optique, procédé et unité de couplage de lumière

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.04.2014 Bulletin 2014/14**

(73) Proprietor: **CCS Technology, Inc.
Wilmington, DE 19803 (US)**

(72) Inventor: **Contag, Karsten
82205 Gilching (DE)**

(74) Representative: **Epping - Hermann - Fischer
Patentanwaltsgesellschaft mbH
Schloßschmidstraße 5
80639 München (DE)**

(56) References cited:
**US-A1- 2002 076 152     US-A1- 2003 165 291
US-A1- 2006 067 620     US-A1- 2009 052 849**

**Description**

The application refers to an optical fiber having an elongate fiber portion and a broadened coupling portion which is arranged at an axial end of the elongate fiber portion and serves for coupling light into and/or out of the optical fiber. The application further refers to a light coupling unit comprising an optical fiber and an optical device (like a photo sensor, a photo diode, a VCSEL or a laser diode). The application further refers to a method of treating an optical fiber.

Optical fibers for visual light require some effort for appropriate coupling to electro-optical components like laser diodes, VCSELs (vertical-cavity surface-emitting lasers), photo sensors or other detectors. Apart from products within the telecommunications market, fiber coupling is used in every device exploiting EOE conversion (Electrical-Optical-Electrical) such as the variants of SFP modules (Small Form-factor Pluggable or Mini-GBIC) and most variants of Active Optical Cable. In most cases extra parts or components are required to efficiently couple an end of an optical fiber to an electrical component which, for instance, may be provided, at a particular position, in an (for instance upper) surface of a mounting plane or support carrier.

The application refers to coupling techniques for arranging an electro-optical component in a position laterally outside the optical fiber, that is a lateral distance from the optical axis of the fiber (or its axial extension), rather than directly at the frontal, axial end of the fiber. Accordingly, the direction of propagation of light within the fiber has to be changed in or near the end portion of the fiber. To this end, conventionally often lenses and/or mirrors are used which however increase the constructional effort and costs of the light coupling unit thus obtained.

For easy mounting of an end portion of an optical fiber, V-shaped or otherwise formed grooves may be provided in the surface of the mount plate carrying the electro-optical device, thus allowing easy insertion and guidance of the optical fiber end portion along the groove. However, in this case the direction of light propagation has to be changed by 90° at the fiber end portion. Conventionally, however, even if the surface of the end portion of the optical fiber is shaped by special treatment, the coupling efficiency is limited, or the maximum coupling efficiency obtainable is incompatible with the desired diffraction angle of exactly 90°.

US 2006/0676120 A1 illustrates an optical fiber with a broadened fiber coupling portion having a curved first surface and an inclined, reflecting second surface. The inclined second surface is located at the center of curvature of the curved first surface, that is at the center of the spherical or, after cleaving the second surface, of the hemispherical fiber coupling portion.

Another optical fiber with these features is illustrated in US 2002/076152 A1.

It is the object of the present application to provide an optical fiber, a light coupling unit and a method which allow the coupling of light at the end of the optical fiber with larger efficiency than conventionally attainable. In particular, the conventionally contradicting demands for total internal reflection at the inclined surface, on the one hand, and for maximum coupling efficiency between the optical fiber and an optical device emitting or detecting light, on the other hand shall be reconciled with one another.

This object is solved by the optical fiber of claim 1, by the light coupling unit of claim 10 and by the method of claim 12.

Herein below some exemplary embodiments are detailed with reference to the drawings.

Figure 1    shows a schematical cross-sectional view of an optical fiber at one axial end, in an intermediate state after a broadened coupling portion has been formed,

Figure 2    shows a schematical cross-sectional view of the optical fiber after a portion of the broadened coupling portion has been cleaved,

Figure 3    shows another schematical view of the optical fiber of Figure 2 and

Figure 4    shows a light coupling unit comprising an optical fiber and an optical device.

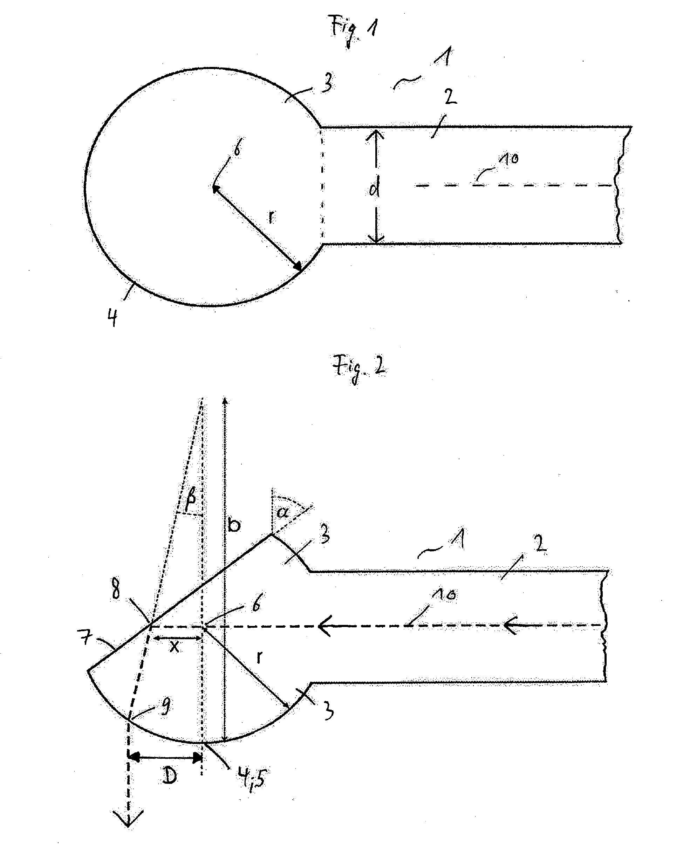

Figure 1 shows a schematical, cross-sectional view of an optical fiber 1, particularly of its axial end which has been treated so as to form a broadened coupling portion 3. Originally, the optical fiber 1 comprises a constantly uniform diameter d along its entire length. The length of the optical fiber 2 extends along the optical axis 10 which forms the geometrical center line of the optical fiber 1 and thereby defines the axial direction along the optical fiber 1. In Figure 1 the coating (normally surrounding any optical fiber) is not shown since at least the depicted axial end of the fiber has been uncoated, as the result of which cylindrical outer surface of the (optically transmissive) fiber itself is exposed near the depicted end portion. The increased diameter at the end portion will not exist until the broadened coupling portion 3 shown in Figure 1 will be formed.

According to Figure 1, as a first step of producing the desired optical fiber 1, an end portion of the fiber is heated, thereby forming the broadened coupling portion 3 shown in Figure 1 at the left end of the fiber. As a result of the heat application (for instance by using a laser for melting the material of the optical fiber at one end), the molten material will form a broadened, ball-shaped or otherwise convexly shaped portion which is thicker than the remaining portion of the optical fiber material. Accordingly, whereas almost the entire fiber, along its length or axial extension, has a diameter d which is uniform (and for instance is between 75 and 150 $\mu$m, for instance equal to 100 or 125 $\mu$m), the heated end portion forms a ball (or other kind of bulging portion) with larger lateral dimensions (in direction perpendicular to the optical axis 10) compared to the diameter of the elongate fiber portion 2. Accordingly, a first surface 4 is formed at the end of the fiber which may take on the shape of a ball or sphere, of an egg or an ellipsoid, respectively. In case of a spherical shape of the first surface 4, the radius r may for instance be such that the lateral dimensions of the broadened coupling portion 3 are between 50 and 100 % larger than the diameter of the elongate fiber portion 2. For instance, in case of an optical fiber with a diameter of 125 $\mu$m, the radius of the ball-shaped broadened end portion might be between 75 and 125 $\mu$m (corresponding to a ball diameter of between 150 and 250 $\mu$m). Since the convex surface 4 of the (heated and then cooled off) end portion of the optical fiber is curved, it can be used for coupling of light transmitted or to be transmitted via the optical fiber 1 at its end portion, thus qualifying the broadened end portion as a coupling portion 3 for coupling light. The end portion of the optical fiber preferably is one integral piece of fiber material, made up of one and the same fiber material.

Heating of the end portion of the optical fiber 1 may be accomplished by laser heating, for instance by using a $CO_2$ laser, with a laser power for instance between 10 and 30 W (such as 20 W) and with a beam diameter for instance between 200 and 400 $\mu$m (such as 300 $\mu$m). Heating of the end portion of the optical fiber 1 is performed such that its material is melting, but not vaporizing; particularly the power density of the laser is chosen sufficiently high to heat the fiber end portion without cutting or vaporizing it. Depending on the exposure time for melting the fiber, the ball-shaped end portions will have varying diameters. The lateral dimensions of the broadened coupling portion 3 (in particular the diameter of its spherical surface 4) is thus controlled by appropriately adjusting and selecting the time during which the fiber end portion is exposed to the laser beam, the laser power applied and the diameter of the laser beam. The exposure time might typically range between half a second and 5 seconds, for instance.

After having performed this first heating step, another step is performed for cleaving, that is cutting or separating a part of the broadened coupling portion 3 formed in Figure 1. Thereby a modified broadened coupling portion 3 as depicted in Figure 2 is obtained. The step of cleaving may preferably be another, second heating step, particularly by laser-cleaving (laser heating), wherein in this step the heating is performed such that a part of the broadened coupling portion 3 is cleaved and thus removed whereas another, remaining portion of the broadened coupling portion 3 is maintained without substantially changing its shape. Accordingly, in Figure 2, as a result of the cleaving step, another, second surface 7 is formed (in addition to the first surface 4) which is inclined to the direction of the optical axis 10 of the optical fiber 1 and which, preferably, is a planar surface. Furthermore, the second surface 7 (cleaving plane) is positioned such that it extends around the center line or optical axis 10 of the optical fiber 1, thus containing a point of intersection 8 at which the optical axis 10 (representing the center line of the elongate, cylindrical elongate fiber portion 2 and its axial extension towards the broadened coupling portion 3) is intersecting the inclined cleaving plane or second surface 7. Accordingly, the second surface 7 obtained by the cleaving step will cause reflection of light propagating along the elongate fiber portion 2 when arriving at the second surface 7 of the broadened coupling portion 3. The remaining portion of the first surface 4 (as far as not removed by the cleaving step) constitutes an optically active surface usable for focusing light which is leaving, after reflection at the second surface 7, the broadened coupling portion 3 in direction laterally or substantially laterally from the axial direction (for instance downwards in Figure 2).

According to the application, the angle of the inclination of the second surface 7 is chosen such that a total internal reflection will occur when light propagating along the broadly dashed line in Figure 2 is reflected at or near the point of intersection 8 of the cleaving plane. The angle $\alpha$ between the normal direction of the second surface 7 and the axial direction of the optical fiber 1 preferably is equal or slightly larger than arcsin(n1/n2), wherein n2 is the refractive index of the optical fiber 1 and n1 is the refractive index of the ambient atmosphere or air (normally equal to 1.0). In case of an optical fiber made of fused silica with n2 = 1.46, for instance, the angle $\alpha$ between the normal direction of the second surface 7 and the optical axis 10 of the fiber 1 may be 51°, or more generally between 48° and 54°, preferably between 50° and 52°. These values and ranges can be chosen particularly in case that a multi-mode optical fiber is used and/or in case that the numerical aperture is taken into account.

The optical fiber 1 of the present application, due to its broadened coupling portion 3, allows improved coupling to electro-optical devices (like photodiodes, or generally photosensors, and VCSELs as well as laser diodes) arranged laterally outside the broadened coupling portion (at a lateral distance from the optical axis 10). For optimum coupling, the direction of light propagation should change by 90° at the broadened coupling portion 3. To this end, the angle between the optical axis 10 and the second surface 7 would usually be expected to be 45°. However, the present application exploits total internal reflection which requires that the angle $\alpha$ of the second surface 7 (Figure 2), at least for many materials of the optical transmissive fiber 1, is about or above 51°. Accordingly, along the path indicated by the broadly dashed line in Figure 2 (indicated by arrows and the optical axis 10), the light reflected at the second surface 7 will normally not leave the broadened coupling portion at an angle of 90° relative to the optical axis 10, non-perpendicular propagation thus adversely affecting the coupling efficiency between the optical fiber 1 and an optical device to be coupled to it.

According to the application, however, the second surface 7 is positioned outside a center 6 of curvature of the first surface 4, thus arriving at an exactly or nearly perpendicular light propagation outside the specially constructed coupling portion 3 (despite of the inclination angle of the second surface 7 still being larger than 45°). Forming the second surface 7 at a distance from the center of curvature 6 of the first surface 4 forms an offset x between the center of curvature 6 and the point of intersection 8 of the second surface 7. This offset x existing along the optical axis 10 is chosen such that the point of light transition through the first surface 4 of the broadened coupling portion 3 is shifted, along the first surface 4, in direction further away from the elongate fiber portion 2. Since the local orientation of the curved first surface 4 along its extension along the axial direction, the angle at which light, after diffraction at the point of light transition 9, is leaving the broadened coupling portion 3, will change. Accordingly, since the second surface 7 is positioned offset from the center of curvature 6 of the first surface 4, the light totally internally reflected at the second surface 7 will arrive at a shifted point or area of the first surface and, after passing through the first surface 4, will propagate outside the broadened coupling portion 3 along a propagation direction nearly perpendicular to the optical axis, that is at 90° relatively to the optical axis 10. This allows to reconcile easy mounting of the optical fiber end (for instance along a V-shaped groove in a support plate) with optimum coupling with maximum light intensity being transmitted between the optical fiber 1 and an optical device (like a photodiode, a photosensor, a VCSEL or a laser diode). Optical devices usually are mounted flat on a support plate of a light coupling unit and best detect or irradiate light in the direction nearly perpendicular to the support plate of the light coupling unit. Naturally, the light propagation indicated along the broadly dashed line in Figure 2 as well is obtained along the opposite direction, like in case of light radiating from any of the above or other light emitting devices, light entrance into the broadened coupling portion 3 and finally light propagation along the elongate fiber portion 2.

In Figure 2, the effect of the curved first surface 4 and of the the axial offset x is indicated for evaluating the proper amount of offset x, that is the optimum distance between the center of the sphere (that is the center 6 of curvature of the first surface 4) and the position where light is totally internally reflected at the cleaving plane (that is the point 8 of intersection of the second surface 7 with the optical axis 10). In the illustration of Figure 2, the portion of the first surface 4 below the center 6 of the (spherically curved) first surface 4 has the effect of a lens surface having a focal length b. Regardless of whether the first surface 4 is formed spherical or not, the entire first surface 4 will mostly be curved in two directions, with its center (either center point or a center area, for instance a center line) residing somewhere within the material filling the broadened coupling portion 3 or even outside it.

Generally, it is not necessary that the entire first surface 4 is precisely formed and curved in a particular way; rather it is sufficient that a first surface portion 5 of the first surface 4 (for instance a surface portion at the lateral side at which light shall pass through the first surface 4) is appropriately formed and curved, preferably curved in two directions. Accordingly, although the entire first surface 4 might be appropriately (for instance spherically) formed in the example of Figures 1 to 3, it is subsequently assumed that at least a smaller, partial (first) surface portion 5 of the first surface 4 is appropriately curved in two directions, thus having a center 6 of curvature within the coupling portion 3. The (first) surface portion 5 may for instance represent, in the example depicted in Figure 2, a lowermost portion of the first surface 4 below the center 6 of curvature and/or below the point 8 of intersection, that is preferably opposite to the position and extension of the second surface 7.

In Figure 2, the focal length b of the first surface portion 5, along the dotted axis crossing the center 6 of curvature, will be

$$b = (n2/(n2-n1)) \cdot r,$$

with r being the radius of the sphere and n2 and n1 being refractive indexes as explained above. With n2 = 1.46 for fused silica (silica glass or quartz glass, respectively) and a radius of r = 100 $\mu$m, for instance, the back focal length would be b = 317 $\mu$m. The angle $\beta$ indicates the reflection angle of light transmitted along the optical axis 10, after total internal reflection at the point of intersection 8. Generally, according to $\beta = 2 \cdot (\alpha - 45°)$, $\beta$ will depend on the inclination angle $\alpha$ of the second surface 7 which for instance is 51° (with $\beta=12°$). For sufficiently small angles $\beta$ as in this example, the light rays passing through the ball lens formed by the first surface portion 5 will propagate between the points 8 and 9 like they were converged and focused at the focal length b behind the first surface portion 5. Accordingly, it is proposed to choose the axial offset x according to the equation:

$$x = \tan(2 \cdot \alpha - 90°) \cdot (n1/(n2 - n1)) \cdot r$$

For the numerical values assumed above, the axial offset x is about 46 $\mu$m, which is nearly a third of the diameter of the spherical first surface 4 of the broadened coupling portion 3 (which diameter is 125 $\mu$m in this example).

Preferably the axial offset x is chosen according to the above equation, thus effecting an axially shifted point or area of transition of light through the first surface 4 (or at least a first surface portion 5), on the outside of the broadened coupling portion 3 resulting in a nearly perpendicular light propagation with regard to the optical axis 10.

As a further result of the axial offset x proposed herein, a preferred mounting offset D is approximately estimated. As apparent from Figure 2, due to the axial offset x, light propagation along the optical axis 10 and reflected at the second surface 7, after transition through the first surface 4 (or surface portion 5), will leave the coupling portion 3 at a yet larger axial position axially yet further away from the elongate fiber portion 2 than offset x. Accordingly, it is advisable to mount any optical device to be coupled to the broadened coupling portion 3 at a position axially offset by a corresponding mounting offset D. As apparent from Figure 2, the magnitude or rough estimate D' for the mounting offset is D' = tan ($\beta$) · b, thus resulting in the equation:

$$D' = \tan(2 \cdot \alpha - 90°) \cdot (n2 / (n2 - n1)) \cdot r$$

Accordingly, the preferred mounting offset will be D = D' or slightly smaller, for instance between 0.9 · D' and 1.0 · D'.

In the above calculations for the axial offset x and the mounting offset D, some assumptions are made which of course may be generalized to obtain a yet more precise dimensioning of the mounting offset. In reality, the geometrical shape of the first surface 4 or even of its first surface portion 5 might not be exactly spherical. Furthermore, the second surface 7 (cleaving plane) might not be exactly planar but have an inclination or orientation which varies across the cleaving plane by less than 20°, preferably less than 10°, and further the refractive index within the broadened coupling portion 3 may vary locally. Furthermore, light rays other than the central ray of light which propagates on and along the optical axis 10 may have to be taken into account. Thus the optimum values of axial offset x and of the mounting offset D may be slightly different. Furthermore, the first surface 4, even near or in its first surface portion 5, may have two different radii of curvature in the directions parallel to and perpendicular to the optical axis 10. By choosing appropriate radii, the coma resulting from the angle between the light beam and the spherical surface can be corrected. Moreover, two different radii can be used for obtaining elliptical profiles of light outside the coupling portion 3 in order to match asymmetric optical properties of photodiodes, VCSEL sor laser diodes etc. with elliptical surfaces and/or different angles of divergence in directions, thus increasing coupling efficiency. Furthermore, the second surface 7 might be formed slightly convex, rather than planar. However, the main focusing effect shall result from the first surface 4. Furthermore, the refractive index n2 preferably is constant and uniform throughout the entire optical fiber 1, but it may vary locally, once having applied the steps of heating and/or cleaving.

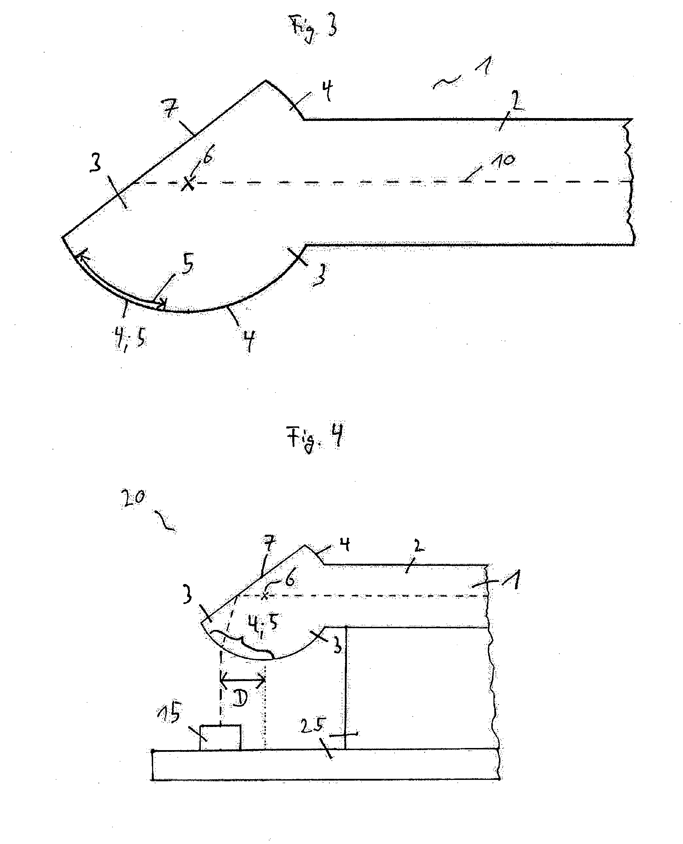

Depending on where the opto-electronic device to be coupled to the optical fiber 1 is detecting or emitting light, both path directions along the broadly dashed line (including the optical axis 10) are affected by the present application, the light either entering the ball lens formed by the first surface 4 of the coupling portion 3 from a light-emitting opto-electronic component or, alternatively, being guided inside the core of the optical fiber 1 and leaving the ball lens to be detected by the optoelectronic component or optical device 15 (Figure 4).

The optical fiber formed as described herein achieves an optical turn of light by 90° and overcomes the problem that the angle of the second surface 7 required for total internal reflection is not compatible with a nearly exact 90° turn. Furthermore, neither any additional mirrors lenses or other molded parts outside and separate from the coupling portion 3 of the optical fiber 1 are required to achieve the improved coupling efficiency. As a further benefit, the end of the optical fiber 1 can be mounted and guided parallel to a surface or groove in the support plate of a light coupling unit (Figure 4), thus obviating the need of tilting the fiber end portion near the printed circuit board, VCSEL, photodiode or other kind of optoelectronic device to be coupled to it. Instead, simple V-shaped grooves may be used to insert the fiber end, and the only adjustment to be made is the axial position, that is the mounting offset D of the optical fiber along the groove.

As regards the cleaving step of Figure 2, this step may also be performed by heating, particularly by laser cleaving, for instance by using a $CO_2$-laser. The heat and laser intensity will be chosen sufficiently large to remove any fiber material outside the cleaving plane to be formed. For instance, the power may be chosen above 20 W, the beam diameter may be chosen between 50 and 300 $\mu$m, and the material may be exposed to the laser beam for a number between 5 and 15 times, for a duration between 0.1 and 1 ms each. At least in the second step of laser heating (for cleaving), the optical fiber may be immersed in an inert gas like $N_2$ during processing, thus preventing oxidation of the heated fiber. By the way, at least the heating of the fiber for forming the broadened coupling portion 3 can also be performed using the electric arc of a fusion splicer or the filament of a fusion splicer. Furthermore, a laser beam used for heating, particularly when cleaving, may be split and directed onto the optical fiber from at least two different directions, thus achieving a more radially symmetric or otherwise radially symmetric heat distribution. Moreover, that partial laser beam not absorbed by the fiber may be re-directed and re-imaged onto the fiber from a second direction to this purpose. Finally, instead of single fibers of circular cross-section, also fiber ribbons may be used as optical fiber 1 and treated this way, in which Figures 1 and 2 still represent schematical cross-sections at least along one cross-sectional plane of the fiber ribbon.

The optical fiber 1 preferably is a fiber designed for single-mode light transmission, but may as well be designed for multi-mode light transmission. Further preferred embodiments are, inter alia, presented in the claims of the application.

Figure 3 shows another, simplified illustration of the optical fiber 1 obtained after the cleaving step essentially corresponding to Figure 2. In Figure 3, the first surface portion 5 defining the center of curvature 6 is indicated. Alternately, the entire first surface 4 may define the center of curvature 6. The method may at least comprise the steps of uncoating an end of fiber, that is removing the coating from an end portion of the optical fiber, a step of cleaving the uncoated end portion of the optical fiber, a step of heating the end portion (thereby forming the broadened coupling portion 3 with the first surface, particularly in the shape of the sphere or ball), and a step of cleaving the broadened coupling portion (so as to form the second surface 7). The method may further comprise, inter alia, a later step of mounting and coupling the optical fiber 1 to an optical device 15, particularly in a position corresponding to an axial mounting offset D, thus forming a light coupling unit 20 as illustrated in Figure 4.

Figure 4 shows a light coupling unit 20 comprising an end portion of an optical fiber 1 (comprising the broadened coupling portion 3 at an axial end of the elongate fiber portion 2). The optical fiber 1 is mounted in parallel to and directly on a mounting plate 25, for instance in the bottom of a V-groove or another kind of guiding structure. An electro-optical device 15, for instance a photodiode, another kind of photodetector, VCSEL or laser diode, is provided on the mounting plate 25. Apart from the orientation of the optical fiber 1 along an azimuthal direction (for the second surface 7 to face away from the optical device 15 and/or from the mounting plate 25), the only positional adjustment to be made is the horizontal position of the optical fiber 1 along the axial direction (of the fiber, the groove or of another guiding structure). This axial position merely needs to be chosen corresponding to the mounting offset D between the center of curvature 6 and the center of the light-emitting or light-detecting surface of the optical device 15. The lateral distance (vertically in Figure 4) between the optical fiber 1 and the optical device 15 (ensuring proper focusing due to the curvature of the first surface portion 5) does not vary with the adjustment of the mounting offset, thus facilitating easy and quick adjustment for optimum coupling.

List of References

| | |
|---|---|
| 1 | optical fiber |
| 2 | elongate fiber portion |
| 3 | broadened coupling portion |
| 4 | first surface |
| 5 | first surface portion |
| 6 | center of curvature |
| 7 | second surface |
| 8 | point of intersection |
| 9 | point of light transition |
| 10 | optical axis |
| 15 | optical device |
| 20 | light coupling unit |
| 25 | mounting plate |
| $\alpha$ | angle |
| $\beta$ | angle |
| b | focal length |
| d | diameter |
| D | mounting offset |
| r | radius |
| x | axial offset |

**Claims**

1. An optical fiber (1) comprising

- an elongate fiber portion (2) and
- a broadened coupling portion (3) arranged at an axial end of the elongate fiber portion (2) for coupling light into and/or out of the optical fiber (1);
- wherein the broadened coupling portion (3) has an outer contour at least comprising a first surface (4) and a second surface (7),
- wherein the first surface (4) comprises a first surface portion (5) being curved in two directions and having a center (6) of curvature and
- wherein the second surface (7) is inclined, the angle ($\alpha$) between the normal direction of the second surface (7) and the optical axis (10) of the optical fiber (1) being larger than 45°, such as to cause total internal reflection of light transmitted or to be transmitted via the optical fiber (1),

**characterized in**

- **that** the second surface (7) is located outside the center (6) of curvature of the first surface portion (5) at a position defining an axial offset (x), along an optical axis (10) of the optical fiber (1), between the second surface (7) and the center (6) of curvature of the first surface portion (5) and
- **that** the axial offset (x) is dimensioned such as to enable propagation of light, which is reflected or is to be reflected at the second surface (7) by total internal reflection, laterally outside the broadened coupling portion (3), at the side near the first surface (4), along a direction of 90° relative to the optical axis (10) of the optical fiber (1).

2. The optical fiber of claim 1,
wherein the amount of an axial offset (x) between the second surface (7) and the center (6) of curvature of the first surface portion (5), along the optical axis (10) of the optical fiber (1), is

$$x = \tan(2\cdot\alpha - 90°)\cdot(n1\ /(n2 - n1))\cdot r,$$

wherein $\alpha$ is the angle between the normal direction of the second surface (7) and the axial direction of the optical fiber (1), r is the radius of the broadened coupling portion (3) defined by the curvature of the first surface portion (5), n2 is the refractive index of the broadened coupling portion (3) and n1 is the refractive index of the ambient atmosphere or air which preferably is equal to 1.

3. The optical fiber of claim 1 or 2,
wherein a point of intersection (8) defined by the second surface (7) intersecting the optical axis (10) of the optical fiber (1) is located at a distance from the elongate fiber portion (2) which distance is larger than a distance of the center (6) of curvature of the first surface portion (5) from the elongate fiber portion (2).

4. The optical fiber of one of claims 1 to 3,
wherein the second surface (7) is planar and uniformly inclined relative to the axial direction of the optical fiber (1) or, alternatively, wherein the orientation of the second surface (7) varies, across the second surface (7), by less than 20°, preferably less than 10°.

5. The optical fiber of one of claims 1 to 4,
wherein the angle ($\alpha$) between the normal direction of the second surface (7) and the axial direction of the optical fiber (1), at least in a region of the second surface (7) at and/or near the optical axis (10) of the optical fiber (1), is chosen according to

$$\alpha \geq \arcsin(n1/n2),$$

wherein n2 is the refractive index of the broadened coupling portion (3) and n1 is the refractive index of the ambient atmosphere or air which preferably is equal to 1.

6. The optical fiber of one of claims 1 to 5,
wherein the angle ($\alpha$) between the normal direction of the second surface (7) and the axial direction of the optical fiber (1), at least in a region of the second surface (7) at and/or near the optical axis (10) of the optical fiber (1), is between 48° and 54°, preferably between 50° and 52°, and more preferably equal to 51°.

7. The optical fiber of one of claims 1 to 6,
wherein the first surface (4) of the broadened coupling portion (3) has a shape corresponding to a portion of the surface of a ball, a sphere, an egg or an ellipsoid.

8. The optical fiber of one of claims 1 to 7,
wherein the second surface (7) is an exposed, uncovered and uncoated outer surface forming part of the outer contour of the broadened coupling portion (3).

9. The optical fiber of one of claims 1 to 8,
wherein the first surface portion (5) constitutes the entire first surface (4), the first surface (4) and the second surface (7) being confined by sharp edges.

10. A light coupling unit (20) comprising:

- an optical fiber (1) according to one of claims 1 to 9 comprising the elongate fiber portion (2) and the broadened coupling portion (3) and
- an optical device (15) capable of emitting or detecting light, preferably a photo diode, a photo sensor, a VCSEL or a laser diode, the optical device (15) being positioned laterally outside the optical fiber (1) near its broadened coupling portion (3),
wherein the optical device (15) is positioned axially offset, along the direction parallel to the optical axis (10) of the optical fiber (1), from the center (6) of curvature of the first surface portion (5) of the broadened coupling portion (3) by a mounting offset (D).

11. The light coupling unit of claim 10,
wherein the mounting offset (D) between the optical device (15) and the center (6) of the curvature of the first surface portion (5) of the broadened coupling portion (3) is between 0.8·D' and 1.2·D', preferably between 0.9·D' and 1.0·D', with

$$D' = \tan(2 \cdot \alpha - 90°) \cdot (n2 / (n2 - n1)) \cdot r$$

wherein $\alpha$ is the angle between the normal direction of the second surface (7) and the axial direction of the optical fiber (1), r is the radius of the broadened coupling portion (3) defined by the curvature of the first surface portion (5), n2 is the refractive index of the broadened coupling portion (3) and n1 is the refractive index of the ambient atmosphere or air which preferably is equal to 1.

12. A method for forming a broadened coupling portion (3) of an optical fiber (1), at least comprising:

a) heating an end portion of an optical fiber (1), thereby forming a broadened coupling portion (3) axially confining an elongate fiber portion (2), the broadened coupling portion (3) thus formed comprising a first surface (4), a first surface portion (5) of the first surface (4) having a curvature defining a center (6) of curvature, which center (6) of curvature resides within the broadened coupling portion (3), and
b) cleaving, or cutting or otherwise treating the broadened coupling portion (3) so as to remove a portion of the broadened coupling portion (3), thereby forming a second surface (7) which is inclined, the angle ($\alpha$) between the normal direction of the second surface (7) and the optical axis (10) of the optical fiber (1) being larger than 45°, such as to cause total internal reflection of light transmitted or to be transmitted via the optical fiber (1), **characterized in**

- **that** step b) is performed such as to form the second surface (7) outside the center (6) of curvature of the first surface portion (5), at a position defining an axial offset (x), along an optical axis (10) of the optical fiber (1), between the second surface (7) and the center (6) of curvature of the first surface portion (5),
- and **that** the axial offset (x) is dimensioned such as to enable propagation of light, which is reflected or is to be reflected at the second surface (7) by total internal reflection, laterally outside the broadened coupling portion (3), at the side near the first surface (4), along a direction of 90° relative to the optical axis (10) of the optical fiber (1).

13. The method of claim 12,

wherein in step b) the portion of the broadened coupling portion (3) is removed by laser-cleaving.

14. The method of claim 12 or 13,
    wherein in step b) the second surface (7) is formed in a position such that the amount of the axial offset (x) between the second surface (7) and the center (6) of curvature of the first surface portion (5), along the optical axis (10) of the optical fiber (1), is

$$x = \tan(2 \cdot \alpha - 90°) \cdot (n1 / (n2 - n1)) \cdot r,$$

wherein $\alpha$ is the angle between the normal direction of the second surface (7) and the axial direction of the optical fiber (1), r is the radius of the broadened coupling portion (3) defined by the curvature of the first surface portion (5), n2 is the refractive index of the broadened coupling portion (3) and n1 is the refractive index of the ambient atmosphere or air which preferably is equal to 1.

15. A method of one of claims 12 to 14, further comprising:

    c) mounting the optical fiber (1) for coupling with an optical device (15) capable of emitting or detecting light, preferably a photo diode, a photo sensor, a VCSEL or a laser diode,
    wherein the step c) of mounting is performed such that the optical device (15), along the direction parallel to the optical axis (10) of the optical fiber (1), is positioned axially offset from the center (6) of curvature of the first surface portion (5) or of the first surface (4) of the broadened coupling portion (3) by a mounting offset (D) larger than the axial offset (x) between the second surface (7) and the center (6) of curvature.

**Patentansprüche**

1. Lichtleitfaser (1), aufweisend:

    - einen langgestreckten Faserabschnitt (2) und
    - einen verbreiterten Kopplungsabschnitt (3), der an einem axialen Ende des langgestreckten Faserabschnitts (2) angeordnet ist, um Licht in die/aus der Lichtleitfaser (1) einzukoppeln/auszukoppeln;
    - wobei der verbreiterte Kopplungsabschnitt (3) eine Außenkontur hat, die mindestens eine erste Fläche (4) und eine zweite Fläche (7) aufweist,
    - wobei die erste Fläche (4) einen ersten Flächenabschnitt (5) aufweist, der in zwei Richtungen gekrümmt ist und eine Krümmungsmitte (6) hat, und
    - wobei die zweite Fläche (7) geneigt ist, wobei der Winkel ($\alpha$) zwischen der senkrechten Richtung der zweiten Fläche (7) und der optischen Achse (10) der Lichtleitfaser (1) größer ist als 45°, um eine interne Totalreflexion von Licht zu bewirken, das über die Lichtleitfaser (1) übertragen wird oder werden soll,
    **dadurch gekennzeichnet,**
    - **dass** sich die zweite Fläche (7) außerhalb der Krümmungsmitte (6) des ersten Flächenabschnitts (5) an einer einen axialen Versatz (x) entlang einer optischen Achse (10) der Lichtleitfaser (1) definierenden Stelle zwischen der zweiten Fläche (7) und der Krümmungsmitte (6) des ersten Flächenabschnitts (5) befindet, und
    - **dass** der axiale Versatz (x) so dimensioniert ist, dass eine Ausbreitung von Licht, das durch interne Totalreflexion an der zweiten Fläche (7) reflektiert wird oder werden soll, seitlich außerhalb des verbreiterten Kopplungsabschnitts (3) auf der Seite nahe der ersten Fläche (4) entlang einer Richtung von 90° in Bezug auf die optische Achse (10) der Lichtleitfaser (1) ermöglicht wird.

2. Lichtleitfaser nach Anspruch 1,
   wobei der Betrag eines axialen Versatzes (x) zwischen der zweiten Fläche (7) und der Krümmungsmitte (6) des ersten Flächenabschnitts (5) entlang der optischen Achse (10) der Lichtleitfaser (1)

$$x = \tan(2 \cdot \alpha - 90°) \cdot (n1 / (n2 - n1)) \cdot r$$

beträgt, worin $\alpha$ der Winkel zwischen der senkrechten Richtung der zweiten Fläche (7) und der axialen Richtung der Lichtleitfaser (1) ist, r der Radius des verbreiterten Kopplungsabschnitts (3) ist, der durch die Krümmung des ersten Flächenabschnitts (5) definiert ist, n2 der Brechungsindex des verbreiterten Kopplungsabschnitts (3) ist, und n1 der Brechungsindex der Umgebungsatmosphäre oder Umgebungsluft ist, der vorzugsweise gleich 1 ist.

3. Lichtleitfaser nach Anspruch 1 oder 2,
wobei ein Schnittpunkt (8), der dadurch definiert ist, dass die zweite Fläche (7) die optische Achse (10) der Lichtleitfaser (1) schneidet, sich in einem Abstand vom langgestreckten Faserabschnitt (2) befindet, welcher Abstand größer ist als ein Abstand der Krümmungsmitte (6) des ersten Flächenabschnitts (5) vom langgestreckten Faserabschnitt (2).

4. Lichtleitfaser nach einem der Ansprüche 1 bis 3,
wobei die zweite Fläche (7) plan und in Bezug auf die axiale Richtung der Lichtleitfaser (1) gleichmäßig geneigt ist, oder alternativ, wobei die Ausrichtung der zweiten Fläche (7) über die zwei Fläche (7) um weniger als 20°, vorzugsweise weniger als 10° variiert.

5. Lichtleitfaser nach einem der Ansprüche 1 bis 4,
wobei der Winkel ($\alpha$) zwischen der senkrechten Richtung der zweiten Fläche (7) und der axialen Richtung der Lichtleitfaser (1) zumindest in einem Bereich der zweiten Fläche (7) an und/oder nahe der optischen Achse (10) der Lichtleitfaser (1) entsprechend

$$\alpha \geq arcsin\ (n1/n2)$$

gewählt ist, wobei n2 der Brechungsindex des verbreiterten Kopplungsabschnitts (3) und n1 der Brechungsindex der Umgebungsatmosphäre oder Umgebungsluft ist, der vorzugsweise gleich 1 ist.

6. Lichtleitfaser nach einem der Ansprüche 1 bis 5,
wobei der Winkel ($\alpha$) zwischen der senkrechten Richtung der zweiten Fläche (7) und der axialen Richtung der Lichtleitfaser (1) zumindest in einem Bereich der zweiten Fläche (7) an und/oder nahe der optischen Achse (10) der Lichtleitfaser (1) zwischen 48° und 54°, vorzugsweise zwischen 50° und 52° beträgt, und noch bevorzugter gleich 51° ist.

7. Lichtleitfaser nach einem der Ansprüche 1 bis 6,
wobei die erste Fläche (4) des verbreiterten Kopplungsabschnitts (3) eine Form hat, die einem Abschnitt der Oberfläche eines Balls, einer Kugel, eines Eis oder einer Ellipse entspricht.

8. Lichtleitfaser nach einem der Ansprüche 1 bis 7,
wobei es sich bei der zweiten Fläche (7) um eine exponierte, unbedeckte und unbeschichtete Außenfläche handelt, die einen Teil der Außenkontur des verbreiterten Kopplungsabschnitts (3) bildet.

9. Lichtleitfaser nach einem der Ansprüche 1 bis 8,
wobei der erste Flächenabschnitt (5) die gesamte erste Fläche (4) bildet, wobei die erste Fläche (4) und die zweite Fläche (7) durch scharfe Kanten eingegrenzt sind.

10. Lichtkopplungseinheit (20), Folgendes aufweisend:

- eine Lichtleitfaser (1) nach einem der Ansprüche 1 bis 9, die den langgestreckten Faserabschnitt (2) und den verbreiterten Kopplungsabschnitt (3) aufweist, und
- eine zum Emittieren oder Detektieren von Licht fähige optische Vorrichtung (15), vorzugsweise eine Fotodiode, ein Fotosensor, ein VCSEL oder eine Laserdiode, wobei die optische Vorrichtung (15) seitlich außerhalb der Lichtleitfaser (1) nahe ihres verbreiterten Kopplungsabschnitts (3) angeordnet ist, wobei die optische Vorrichtzung (15) entlang der zur optischen Achse (10) der Lichtleitfaser (1) ausgehend von der Krümmungsmitte (6) des ersten Flächenabschnitts (5) des verbreiterten Kopplungsabschnitts (3) parallelen Richtung um einen Einbauversatz (D) axial versetzt angeordnet ist.

11. Lichtkopplungseinheit nach Anspruch 10,
wobei der Einbauversatz (D) zwischen der optischen Vorrichtung (15) und der Krümmungsmitte (6) des ersten Flächenabschnitts (5) des verbreiterten Kopplungsabschnitts (3) zwischen 0,8 · D' und 1,2 · D', vorzugsweise zwischen 0,9 · D' und 1,0 · D' beträgt, wobei

$$D' = \tan (2 \cdot \alpha - 90°) \cdot (n2 / (n2 - n1)) \cdot r \text{ ist,}$$

wobei $\alpha$ der Winkel zwischen der senkrechten Richtung der zweiten Fläche (7) und der axialen Richtung der Lichtleitfaser (1) ist, r der Radius des verbreiterten Kopplungsabschnitts (3) ist, der durch die Krümmung des ersten Flächenabschnitts (5) definiert ist, n2 der Brechungsindex des verbreiterten Kopplungsabschnitts (3) ist, und n1 der Brechungsindex der Umgebungsatmosphäre oder Umgebungsluft ist, der vorzugsweise gleich 1 ist.

12. Verfahren zum Ausbilden eines verbreiterten Kopplungsabschnitts (3) einer Lichtleitfaser (1), mindestens umfassend:

a) Erwärmen eines Endabschnitts einer Lichtleitfaser (1), wodurch ein verbreiterter Kopplungsabschnitt (3) gebildet wird, der axial einen langgestreckten Faserabschnitt (2) eingrenzt, wobei der so ausgebildete verbreiterte Kopplungsabschnitt (3) eine erste Fläche (4) aufweist, wobei ein erster Flächenabschnitt (5) der ersten Fläche (4) eine Krümmung hat, die eine Krümmungsmitte (6) definiert, welche Krümmungsmitte (6) innerhalb des verbreiterten Kopplungsabschnitts (3) liegt, und

b) Abspalten oder Zerschneiden oder anderweitiges Bearbeiten des verbreiterten Kopplungsabschnitts (3), um einen Teil des verbreiterten Kopplungsabschnitts (3) zu entfernen, wodurch eine zweite Fläche (7) gebildet wird, die geneigt ist, wobei der Winkel ($\alpha$) zwischen der senkrechten Richtung der zweiten Fläche (7) und der optischen Achse (10) der Lichtleitfaser (1) größer ist als 45°, um eine interne Totalreflexion von Licht zu bewirken, das über die Lichtleitfaser (1) übertragen wird oder werden soll,
**dadurch gekennzeichnet,**

- **dass** der Schritt b) erfolgt, um die zweite Fläche (7) außerhalb der Krümmungsmitte (6) des ersten Flächenabschnitts (5) an einer einen axialen Versatz (x) entlang einer optischen Achse (10) der Lichtleitfaser (1) definierenden Stelle zwischen der zweiten Fläche (7) und der Krümmungsmitte (6) des ersten Flächenabschnitts (5) auszubilden,
- und **dass** der axiale Versatz (x) so dimensioniert wird, dass eine Ausbreitung von Licht, das durch interne Totalreflexion an der zweiten Fläche (7) reflektiert wird oder werden soll, seitlich außerhalb des verbreiterten Kopplungsabschnitts (3) auf der Seite nahe der ersten Fläche (4) entlang einer Richtung von 90° in Bezug auf die optische Achse (10) der Lichtleitfaser (1) ermöglicht wird.

13. Verfahren nach Anspruch 12,
wobei im Schritt b) der Abschnitt des verbreiterten Kopplungsabschnitts (3) durch Laserabspaltung entfernt wird.

14. Verfahren nach Anspruch 12 oder 13,
wobei im Schritt b) die zweite Fläche (7) an einer derartigen Stelle ausgebildet wird, dass der Betrag des axialen Versatzes (x) zwischen der zweiten Fläche (7) und der Krümmungsmitte (6) des ersten Flächenabschnitts (5) entlang der optischen Achse (10) der Lichtleitfaser (1)

$$x = \tan (2 \cdot \alpha \cdot - 90°) \cdot (n1 / (n2 - n1)) \cdot r$$

beträgt, worin $\alpha$ der Winkel zwischen der senkrechten Richtung der zweiten Fläche (7) und der axialen Richtung der Lichtleitfaser (1) ist, r der Radius des verbreiterten Kopplungsabschnitts (3) ist, der durch die Krümmung des ersten Flächenabschnitts (5) definiert ist, n2 der Brechungsindex des verbreiterten Kopplungsabschnitts (3) ist, und n1 der Brechungsindex der Umgebungsatmosphäre oder Umgebungsluft ist, der vorzugsweise gleich 1 ist.

15. Verfahren nach einem der Ansprüche 12 bis 14, darüber hinaus umfassend:

c) Anbringen der Lichtleitfaser (1) zur Kopplung mit einer zum Emittieren und Detektieren von Licht fähigen optischen Vorrichtung (15), vorzugsweise einer Fotodiode, einem Fotosensor, einem VCSEL oder einer Laserdiode,

wobei der Schritt c) des Anbringens so erfolgt, dass die optische Vorrichtung (15) entlang der zur optischen Achse (10) der Lichtleitfaser (1) ausgehend von der Krümmungsmitte (6) des ersten Flächenabschnitts (5) oder der ersten Fläche (4) des verbreiterten Kopplungsabschnitts (3) parallelen Richtung um einen Einbauversatz (D) axial versetzt angeordnet wird, der größer ist als der axiale Versatz (x) zwischen der zweiten Fläche (7) und der Krümmungsmitte (6).

**Revendications**

1.  Fibre optique (1) comprenant

    - une partie de fibre étirée (2) et
    - une partie de couplage élargie (3) agencée à une extrémité axiale de la partie de fibre étirée (2) pour coupler de la lumière dans et/ou hors de la fibre optique (1) ;
    - sachant que la partie de couplage élargie (3) présente un contour extérieur comprenant au moins une première surface (4) et une deuxième surface (7),
    - sachant que la première surface (4) comprend une première partie de surface (5) étant incurvée dans deux directions et ayant un centre (6) de courbure et
    - sachant que la deuxième surface (7) est inclinée, l'angle ($\alpha$) entre la direction normale de la deuxième surface (7) et l'axe optique (10) de la fibre optique (1) étant supérieur à 45°, de façon à provoquer la réflexion interne totale de la lumière transmise ou à transmettre via la fibre optique (1),
    **caractérisée en ce**
    - **que** la deuxième surface (7) est située à l'extérieur du centre (6) de courbure de la première partie de surface (5) dans une position définissant un décalage axial (x), le long d'un axe optique (10) de la fibre optique (1), entre la deuxième surface (7) et le centre (6) de courbure de la première partie de surface (5) et
    - en ce que le décalage axial (x) est dimensionné de façon à permettre la propagation de lumière, qui est réfléchie ou doit être réfléchie sur la deuxième surface (7) par réflexion interne totale, latéralement à l'extérieur de la partie de couplage élargie (3), du côté situé près de la première surface (4), le long d'une direction de 90° par rapport à l'axe optique (10) de la fibre optique (1).

2.  La fibre optique de la revendication 1,
    dans laquelle la quantité d'un décalage axial (x) entre la deuxième surface (7) et le centre (6) de courbure de la première partie de surface (5), le long de l'axe optique (10) de la fibre optique (1), est

$$x = \tan (2 \cdot \alpha - 90°) \cdot (n1 / (n2 - n1)) \cdot r,$$

    où $\alpha$ est l'angle entre la direction normale de la deuxième surface (7) et la direction axiale de la fibre optique (1), r est le rayon de la partie de couplage élargie (3) définie par la courbure de la première partie de surface (5), n2 est l'indice de réfraction de la partie de couplage élargie (3) et n1 est l'indice de réfraction de l'atmosphère ambiante ou de l'air ambiant, lequel est de préférence égal à 1.

3.  La fibre optique de la revendication 1 ou 2,
    dans laquelle un point d'intersection (8) défini par la deuxième surface (7) coupant l'axe optique (10) de la fibre optique (1) est situé à une distance par rapport à la partie de fibre étirée (2), laquelle distance est plus grande qu'une distance du centre (6) de courbure de la première partie de surface (5) par rapport à la partie de fibre étirée (2).

4.  La fibre optique de l'une des revendications 1 à 3,
    dans laquelle la deuxième surface (7) est planaire et uniformément inclinée par rapport à la direction axiale de la fibre optique (1) ou, alternativement, dans laquelle l'orientation de la deuxième surface (7) varie, sur l'ensemble de la deuxième surface (7), de moins de 20°, de préférence de moins de 10°.

5.  La fibre optique de l'une des revendications 1 à 4,
    dans laquelle l'angle ($\alpha$) entre la direction normale de la deuxième surface (7) et la direction axiale de la fibre optique (1), au moins dans une région de la deuxième surface (7) située sur et/ou près de l'axe optique (10) de la fibre optique (1), est choisi conformément à

$$\alpha \geq \text{arcsin (n1/n2),}$$

où n2 est l'indice de réfraction de la partie de couplage élargie (3) et n1 est l'indice de réfraction de l'atmosphère ambiante ou de l'air ambiant, lequel est de préférence égal à 1.

**6.** La fibre optique de l'une des revendications 1 à 5,
dans laquelle l'angle ($\alpha$) entre la direction normale de la deuxième surface (7) et la direction axiale de la fibre optique (1), au moins dans une région de la deuxième surface (7) située sur et/ou près de l'axe optique (10) de la fibre optique (1), est compris entre 48° et 54°, de préférence entre 50° et 52°, et de façon plus préférentielle est égal à 51°.

**7.** La fibre optique de l'une des revendications 1 à 6,
dans laquelle la première surface (4) de la partie de couplage élargie (3) a une forme correspondant à une partie de la surface d'une bille, d'une sphère, d'un oeuf ou d'un ellipsoïde.

**8.** La fibre optique de l'une des revendications 1 à 7,
dans laquelle la deuxième surface (7) est une surface extérieure exposée, non couverte et non revêtue formant une partie du contour extérieur de la partie de couplage élargie (3).

**9.** La fibre optique de l'une des revendications 1 à 8,
dans laquelle la première partie de surface (5) constitue toute la première surface (4), la première surface (4) et la deuxième surface (7) étant délimitées par des arêtes vives.

**10.** Unité de couplage de lumière (20) comprenant :

- une fibre optique (1) selon l'une des revendications 1 à 9 comprenant la partie de fibre étirée (2) et la partie de couplage élargie (3) et
- un dispositif optique (15) capable d'émettre ou de détecter de la lumière, de préférence une photodiode, un photocapteur, un VCSEL ou une diode laser, le dispositif optique (15) étant positionné latéralement à l'extérieur de la fibre optique (1) près de sa partie de couplage élargie (3),
sachant que le dispositif optique (15) est positionné de manière axialement décalée, le long de la direction parallèle à l'axe optique (10) de la fibre optique (1), du centre(6) de courbure de la première partie de surface (5) de la partie de couplage élargie (3), à raison d'un décalage de montage (D).

**11.** L'unité de couplage de lumière de la revendication 10, dans laquelle le décalage de montage (D) entre le dispositif optique (15) et le centre (6) de la courbure de la première partie de surface (5) de la partie de couplage élargie (3) est compris entre 0,8·D' et 1,2·D', de préférence entre 0,9·D' et 1,0·D', avec

$$D' = \text{tan (2} \cdot \alpha - 90°) \cdot \text{(n2 / (n2 - n1))} \cdot r$$

où $\alpha$ est l'angle entre la direction normale de la deuxième surface (7) et la direction axiale de la fibre optique (1), r est le rayon de la partie de couplage élargie (3) définie par la courbure de la première partie de surface (5), n2 est l'indice de réfraction de la partie de couplage élargie (3) et n1 est l'indice de réfraction de l'atmosphère ambiante ou de l'air ambiant, lequel est de préférence égal à 1.

**12.** Procédé destiné à former une partie de couplage élargie (3) d'une fibre optique (1), comprenant au moins :

a) le fait de chauffer une partie d'extrémité d'une fibre optique (1), formant ainsi une partie de couplage élargie (3) délimitant axialement une partie de fibre étirée (2), la partie de couplage élargie (3) formée de la sorte comprenant une première surface (4), une première partie de surface (5) de la première surface (4) ayant une courbure définissant un centre (6) de courbure, lequel centre (6) de courbure est situé à l'intérieur de la partie de couplage élargie (3), et
b) le fait de cliver, ou de découper ou de traiter d'une autre manière la partie de couplage élargie (3) de façon à enlever une partie de la partie de couplage élargie (3), formant ainsi une deuxième surface (7) qui est inclinée, l'angle ($\alpha$) entre la direction normale de la deuxième surface (7) et l'axe optique (10) de la fibre optique (1) étant supérieur à 45°, de façon à provoquer la réflexion interne totale de la lumière transmise ou à transmettre via la fibre optique (1),

**caractérisé en ce**

- **que** l'étape (b) est effectuée de façon à former la deuxième surface (7) à l'extérieur du centre (6) de courbure de la première partie de surface (5), dans une position définissant un décalage axial (x), le long d'un axe optique (10) de la fibre optique (1), entre la deuxième surface (7) et le centre (6) de courbure de la première partie de surface (5),
- et en ce que le décalage axial (x) est dimensionné de façon à permettre la propagation de lumière, qui est réfléchie ou doit être réfléchie sur la deuxième surface (7) par réflexion interne totale, latéralement à l'extérieur de la partie de couplage élargie (3), du côté situé près de la première surface (4), le long d'une direction de 90° par rapport à l'axe optique (10) de la fibre optique (1).

13. Le procédé de la revendication 12,
dans lequel, à l'étape b), la partie de la partie de couplage élargie (3) est enlevée par clivage au laser.

14. Le procédé de la revendication 12 ou 13,
dans lequel, à l'étape b), la deuxième surface (7) est formée dans une position de telle sorte que la quantité du décalage axial (x) entre la deuxième surface (7) et le centre (6) de courbure de la première partie de surface (5), le long de l'axe optique (10) de la fibre optique (1), soit

$$x = \tan (2 \cdot \alpha - 90°) \cdot (n1 / (n2 - n1)) \cdot r,$$

où $\alpha$ est l'angle entre la direction normale de la deuxième surface (7) et la direction axiale de la fibre optique (1), r est le rayon de la partie de couplage élargie (3) définie par la courbure de la première partie de surface (5), n2 est l'indice de réfraction de la partie de couplage élargie (3) et n1 est l'indice de réfraction de l'atmosphère ambiante ou de l'air ambiant, lequel est de préférence égal à 1.

15. Procédé de l'une des revendications 12 à 14, comprenant en outre :

c) le montage de la fibre optique (1) en vue du couplage avec un dispositif optique (15) capable d'émettre ou de détecter de la lumière, de préférence une photodiode, un photocapteur, un VCSEL ou une diode laser, sachant que l'étape c) de montage est effectuée de telle sorte que le dispositif optique (15), le long de la direction parallèle à l'axe optique (10) de la fibre optique (1), soit positionné de manière axialement décalée du centre (6) de courbure de la première partie de surface (5) ou de la première surface (4) de la partie de couplage élargie (3) à raison d'un décalage de montage (D) supérieur au décalage axial (x) entre la deuxième surface (7) et le centre (6) de courbure.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060676120 A1
- US 2002076152 A1